# EUROPÄISCHE PATENTSCHRIFT

(11) **EP 2 098 386 B1**
(45) Veröffentlichungstag und Bekanntmachung des Hinweises auf die Patenterteilung: **01.08.2012**
(21) Anmeldenummer: 09000753.5
(22) Anmeldetag: 21.01.2009
(51) Int. Cl.: B60G 7/00, B62D 5/04, B62D 7/20, B60G 15/06, B60G 17/02, B62D 7/14, B62D 17/00

(54) **Stellglied für ein Radführungselement von Radaufhängungen**
Actuator for a wheel guidance element for wheel suspension
Actionneur pour un élément de guidage de roue de suspensions de roue

(30) Priorität: 05.03.2008 DE 102008012686
(43) Veröffentlichungstag der Anmeldung: 09.09.2009
(73) Patentinhaber: Audi AG, 85045 Ingolstadt (DE)
(72) Erfinder: Kossira, Christoph, 85053 Ingolstadt (DE); Meitinger, Karl-Heinz, 83308 Trostberg (DE); Michel, Wilfried, 93339 Riedenburg (DE)
(74) Vertreter: Asch, Konrad

(56) Entgegenhaltungen:
- EP-A- 1 958 800
- DE-A1- 3 836 255
- DE-A1- 10 120 102
- DE-A1- 19 955 410
- DE-A1-102005 023 250
- DE-A1-102006 020 041
- US-A- 5 060 959
- US-A1- 2005 051 988

## Beschreibung

Die Erfindung betrifft ein Stellglied für ein Radführungselement von Radaufhängungen, insbesondere in Kraftfahrzeugen, gemäß dem Oberbegriff des Patentanspruches 1.

Stellglieder bzw. Aktuatoren werden zur Spurverstellung an Fahrzeug-Hinterachsen eingesetzt. Dabei sind Aktuatoren ohne Kraftausgleich sowie Aktuatoren mit einem Kraftausgleich bekannt. Bei Aktuatoren ohne Kraftausgleich müssen sämtliche eingebrachte Kräfte mithilfe des Stellgliedes ausgeglichen werden. Daraus ergibt sich ein größerer Energiebedarf.

Aus der US-A-5 060 959 ist ein gattungsgemäßes Stellglied für ein Radführungselement bekannt. Das Stellglied weist einen Stellantrieb auf, mit dem die Länge des Radführungselementes gezielt verändert werden kann. In dem Stellglied ist eine Kompensationsfeder vorgesehen, die den auf das Radführungselement wirkenden Druckkräften entgegenwirkt. Aus der DE 101 20 102 A1 und aus der DE 199 55 410 A1 ist ebenfalls ein solches Stellglied bekannt.

Ein weiteres Stellglied mit Kraftausgleich ist aus der DE 10 2006 020 041 A1 bekannt. Das hier gezeigte Stellglied wird bei aktiven Radaufhängungen eingesetzt. Damit können gezielt Spuränderungen der Räder oder anderer fahrstabilitätsrelevanter Parameter der Radaufhängung, z.B. auch Sturzänderungen, etc. durchgeführt werden. Die Radführungselemente können Spurstangen, Lenker, etc. sein, die einerseits am Aufbau des Kraftfahrzeuges und andererseits an einem Radträger angelenkt sind, wobei durch deren Längenänderungen über das integrierte Stellglied die Spur - und/oder Sturzwerte der Räder entsprechend veränderbar sind. In dem bekannten Stellglied ist eine Kompensationsfeder vorgesehen, die den durch Beladungszustände und Fahrsituationen auftretenden Druckkräften im Radführungselement entgegenwirken und somit in vorteilhafter Weise die aufzubringenden Stellkräfte im Stellglied verringern.

Die Kompensationsfeder des Stellgliedes wirkt mit im Wesentlichen konstanter Vorspannung den Druckkräften entgegen. Änderungen der Druckkräfte aufgrund von variierenden Beladungszuständen, Niveaustellungen und dergleichen können dagegen nicht ausgeglichen werden.

Aufgabe der Erfindung ist es, ein Stellglied der gattungsgemäßen Art vorzuschlagen, das in noch größerem Umfang den in Radaufhängungen auftretenden statischen und dynamischen Belastungen des Stellgliedes Rechnung trägt bzw. eine noch größere Verringerung der auftretenden Stellkräfte im Stellglied ermöglicht.

Diese Aufgabe wird erfindungsgemäß mit den Merkmalen des Patentanspruches 1 gelöst. Vorteilhafte Weiterbildungen der Erfindung beinhalten die Unteransprüche.

Gemäß dem kennzeichnenden Teil des Patentanspruches 1 ist neben dem ersten Stellantrieb, d. h. dem Hauptsteller, der die Länge des Radführungselements verändert, ein zweiter Stellantrieb vorgesehen. Der zweite Stellantrieb ändert über einen Stelltrieb die Vorspannkraft der Kompensationsfeder. Damit gelingt es, die Kompensationsfeder bzw. deren Vorspannkraft stets an die sich ändernden Druckkräfte im Radführungselement anzupassen und somit die Stellkräfte optimal zu verringern. Angestrebt ist dabei, dass die Druckkräfte aus der Radaufhängung und die Vorspannkraft der Kompensationsfeder sich ständig gegeneinander aufheben und somit entsprechend das Stellglied mit dem Elektromotor und dem Stellgetriebe wirksam entlasten.

Durch den erfindungsgemäßen Ausgleich der variierenden Druckkräfte reduziert sich die erforderliche Kraft zur Längenverstellung des Stellgliedes. Dadurch sinkt der Energieverbrauch des Systems. Die benötigte maximale Kraft des Stelltriebes des Hauptstellers lässt sich so signifikant reduzieren, was zu einer leistungsreduzierten Auslegung des ersten Stelltriebes, d. h. des Hauptstellers, führt. Die mechanische Auslegung des Hauptstellers kann daher aufgrund deutlich geringerer Stell- und Haltekräfte erfolgen, wodurch das Gewicht und der Bauraum reduziert werden kann.

Die Vorspannkraft der Kompensationsfeder kann dabei in vorteilhafter Weise abhängig vom Beladungszustand und/oder von fahrspezifischen Parametern des Kraftfahrzeuges veränderbar sein und somit zumindest näherungsweise einen ständigen Ausgleich der Druckkräfte steuern, die üblicherweise mit zunehmender Beladung des Kraftfahrzeuges, mit zunehmender Geschwindigkeit und/oder in Kurven bei entsprechend höheren Seitenkräften an den Rädern, aber auch bei unebenen Fahrbahnen, etc. entsprechend variieren können.

Besonders vorteilhaft kann ferner die Vorspannkraft der Kompensationsfeder abhängig von der Leistungsaufnahme des ersten Stellmotors veränderbar sein. Das heißt, dass durch entsprechende regelungstechnische Auswertung der Leistungsaufnahme des Stellmotors auf die momentan auftretenden Druckkräfte geschlossen werden kann und dementsprechend in einer adaptiven Regelung durch Anpassung der Vorspannkraft der Kompensationsfeder die Leistungsaufnahme des Stellmotors auf einen Minimalwert zurückgefahren werden kann.

In baulich günstiger Weise ist der auf die Kompensationsfeder wirkende, zweite Stelltrieb koaxial zur Stellstange des ersten Stellgetriebes angeordnet und über einen benachbart und achsparallel zum ersten Stellmotor mit Stellgetriebe angeordneten Elektromotor angetrieben. Dies ermöglicht eine besonders kompakte Konstruktion des Stellgliedes.

Des weiteren ist die um die Stellstange angeordnete, durch eine Schraubendruckfeder gebildete Kompensationsfeder an einer Gewindemutter abgestützt, die auf einer über einen untersetzten Vorgelegetrieb angetriebenen Gewindehülse geführt ist. Der Vorgelegetrieb kann dabei ein Schneckentrieb oder bevorzugt ein Stirnzahnradtrieb sein. Über den weitgehendst selbsthemmenden Gewindetrieb kann in fertigungstechnisch einfacher Weise die Vorspannkraft der Kompensationsfeder verstellt werden.

Ferner kann der Vorgelegetrieb in axialer Richtung gesehen zwischen dem ersten Stellgetriebe und der Kompensationsfeder positioniert sein und damit baulich günstig bzw. axial besonders kurz bauend in das Stellglied integriert sein. Dabei kann zudem das Abtriebszahnrad des Vorgelegetriebes fertigungstechnisch günstig einstückig mit der Gewindehülse des zweiten Stelltriebes ausgeführt sein.

Die Gewindehülse kann des weiteren zur Erzielung einer günstigen, symmetrischen Abstützung der Vorspannkräfte der Kompensationsfeder auf einer um die Stellstange des ersten Stellgetriebes angeordneten, gehäusefesten Führungshülse drehbar gelagert sein. Die Drehlagerung der Gewindehülse und des Abtriebszahnrades des Vorgelegetriebes ist dabei bevorzugt durch zwei Radialwälzlager und ein zwischen dem Abtriebszahnrad und einem Radialflansch der Führungshülse angeordnetes Axialwälzlager gebildet. Damit wird eine robuste und verschleißarme Drehlagerung sichergestellt.

Schließlich können in baulich und fertigungstechnisch günstiger Weise der Elektromotor mit dem Stellgetriebe und der zweite, elektrisch angetriebene Stelltrieb in ein gemeinsames Gehäuse des Radführungselementes integriert sein.

Ein Ausführungsbeispiel der Erfindung ist im Folgenden näher erläutert. Die schematische Zeichnung zeigt einen teilweisen Längsschnitt durch ein in einen Lenker einer Radaufhängung für Kraftfahrzeuge integriertes Stellglied mit einem elektrisch angetriebenen Stelltrieb zur variablen Einstellung der Vorspannkräfte einer integrierten Kompensationsfeder.

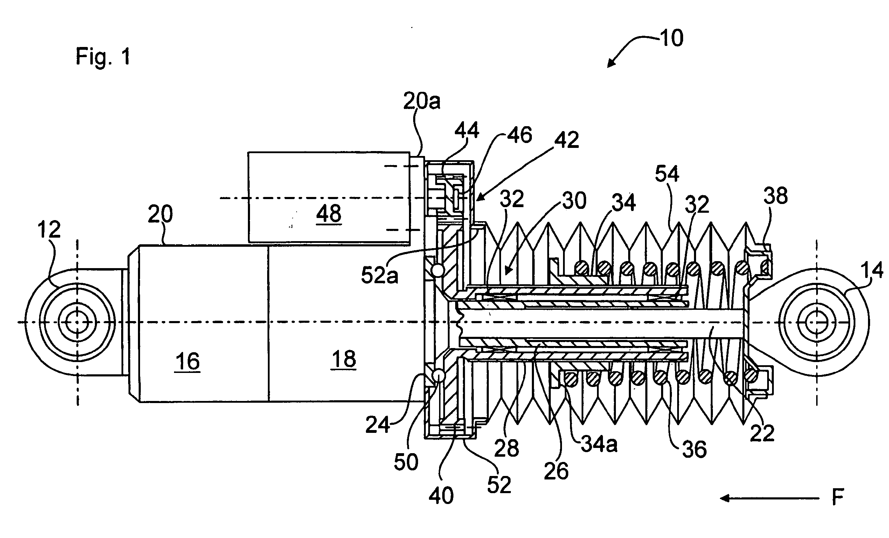

In der Zeichnung ist mit 10 ein Lenker oder eine Spurstange einer nicht dargestellten, hinteren Radaufhängung für Kraftfahrzeuge bezeichnet, der über Gummi-Metall-Hülsengelenke 12, 14 einerseits am Aufbau oder an einem Hilfsrahmen des Kraftfahrzeuges und andererseits an einem Radträger der Radaufhängung angelenkt ist. Der Lenker 10 greift an seinem einen Ende 14 an einem Lenkarm des Radträgers an, so dass bei einer Längenänderung des Lenkers 10 der Radträger in bekannter Weise um eine durch andere Lenker gebildete Lenkachse zur Verstellung der Spur des Hinterrades verschwenkt wird. Der Lenker 10 kann aber auch in anderer, bekannter Anordnung zur Verstellung z. B. des Radsturzes eingesetzt sein.

In den Lenker 10 ist zu dessen Längenverstellbarkeit ein elektrischer Stellmotor 16 und ein Stellgetriebe 18 integriert, die in einem gemeinsamen Gehäuse 20 angeordnet sind, an dem auch das Gelenk 12 aufgenommen ist. Das Stellgetriebe 18 wirkt trieblich auf eine Stellstange 22, an deren Ende das zweite Gelenk 14 ausgebildet ist.

Zur möglichen Konstruktion bzw. Ausbildung des Elektromotors 16 und des Stellgetriebes 18 wird z. B. auf die vorgenannte DE 10 2006 020 041 A1 Bezug genommen, bei der der Elektromotor 18 eine Kugelmutter eines Kugelgewindetriebes antreibt, dessen Gewindespindel mit der Stellstange 22 verbunden ist, so dass bei einem Verdrehen der Kugelmutter die Gewindespindel mit der Stellstange 22 axial verschoben wird und eine Längenänderung des Lenkers 10 bewirkt. Das Stellgetriebe 18 kann aber auch durch einen einfachen Gewindetrieb ohne dazwischen gelagerte Kugeln ausgeführt sein.

Abweichend zur genannten Ausführung des Stellmotors 16 und des Stellgetriebes 18 sind in dem hier dargestellten Ausführungsbeispiel der Elektromotor 16 und das Stellgetriebe 18 in nicht näher dargestellter Weise koaxial ausgerichtet; das heißt, der Stellmotor 16 und das Stellgetriebe 18 liegen baulich günstig axial hintereinander.

An dem Gehäuse 20 des Lenkers 10 ist über einen Flanschabschnitt 24 eine Führungshülse 26 befestigt, die sich über einen Teil der Länge der Stellstange 22 um diese herum erstreckt.

Auf der Führungshülse 26 ist eine Gewindehülse 28 eines zweiten Stelltriebes 30 über zwei Radialwälzlager bzw. Nadellager 32 drehbar gelagert. Die Gewindehülse 28 weist ein Außengewinde auf, das mit dem Innengewinde einer auf die Gewindehülse 28 aufgeschraubten Gewindemutter 34 zusammenwirkt.

Um die Gewindemutter 34 und die Gewindespindel 28 und um die Stellstange 22 herum ist eine als Schraubendruckfeder ausgeführte Kompensationsfeder 36 vorgesehen, die sich einerseits an einem radial nach außen abragenden Ringbund 34a der Gewindemutter 34 und andererseits an einer Anschlagtasse 38 an der Stellstange 22 bzw. dem Gelenk 14 abstützt.

Die Kompensationsfeder 36 wirkt somit über den Stelltrieb 30 mit einer definierten Vorspannkraft auftretenden Druckkräften (Pfeil F) aus der Anlenkung des Lenkers 10 an dem nicht dargestellten Radträger der Radaufhängung entgegen.

An die Gewindehülse 28 ist ein Abtriebszahnrad 40 eines untersetzten Vorgelegetriebes 42 angeformt, dessen Antriebsritzel 44 auf der Antriebswelle 46 eines achsparallel zum Stellmotor 16 und zum Stellgetriebe 18 angeordneten Elektromotors 48 befestigt ist. Der Elektromotor 48 ist an einem radial abragenden Gehäuseflansch 20a über nicht dargestellte Schrauben befestigt.

Zur Abstützung von über die Kompensationsfeder 36 ausgeübten Axialkräften ist ein Axialwälzlager (Drucklager) 50 zwischen dem Flanschabschnitt 24 der Führungshülse 26 und dem Abtriebszahnrad 40 auf der Gewindehülse 28 vorgesehen.

Schließlich sind zur Abdeckung des Vorgelegetriebes 42 und des Gewindetriebes 30 mit der Kompensationsfeder 36 eine am Gehäuse 20 befestigte Haube 52 aus plastischem Kunststoff und eine daran anschließende, gummielastische Schutzmanschette 54 angeordnet, wobei die Schutzmanschette 54 an einem Ringbund 52a der Haube 52 und an der Anschlagtasse 38 festgelegt ist.

Durch elektrisches Ansteuern des Elektromotors 48 in der einen oder anderen Drehrichtung wird über den Vorgelegetrieb 42 und den Gewindetrieb 30 die über die Kompensationsfeder 36 unverdrehbar gehaltene Kugelmutter 34 axial auf der Zeichnung nach links oder rechts verlagert, wodurch die Vorspannung der Kompensationsfeder 36 vermindert oder erhöht wird und somit an veränderliche Druckkräfte F der Radaufhängung anpassbar ist.

Der Stellmotor 16 und der Elektromotor 48 sind an eine nicht dargestellte, elektronische Steuerung angeschlossen, z. B. an ein elektronisches Fahrstabilitätsprogramm (ESP®), über die zum einen in bekannter Weise die Spur des betreffenden Rades bzw. dessen Lenkwinkel eingestellt wird. Des Weiteren wird durch Ansteuerung des Elektromotors 48 über den zweiten Stelltrieb 42, 30 die Vorspannung der Kompensationsfeder 36 so verändert, dass sie die momentan auftretenden Druckkräfte F aus der Radaufhängung ausgleicht.

Das elektronische Steuergerät verarbeitet dabei Signale, die den Beladungszustand des Kraftfahrzeuges, dessen Geschwindigkeit, die Gierrate beim Durchfahren von Kurven, Fahrbahnunebenheiten, etc. anzeigen, errechnet daraus die durch empirische Untersuchungen ermittelten Druckkräfte F und steuert die entsprechende Vorspannkraft der Kompensationsfeder 36 derart, dass sich Vorspannkraft und Druckkraft F zumindest näherungsweise gegeneinander aufheben. Die momentane Vorspannkraft der Kompensationsfeder 36 kann mittels eines in den Stelltrieb 42, 30 integrierten Wegsensors oder eines Drucksensors ermittelt werden (nicht dargestellt).

Abweichend oder zusätzlich dazu kann über eine adaptive, elektronische Steuerung die Leistungsaufnahme des Stellmotors 16 ausgewertet und der Elektromotor 48 des Stelltriebes 42, 30 so gesteuert werden, dass die Leistungsaufnahme des Stellmotors auf einen Minimalwert eingestellt wird. Dieser Minimalwert entspricht einem optimalen Ausgleich zwischen der Vorspannkraft der Kompensationsfeder 36 und den momentan auftretenden Druckkräften F.

## Patentansprüche

1. Stellglied für ein Radführungselement (10) von Fahrzeug-Radaufhängungen, mit einem ersten, vorzugsweise elektrisch betriebenen Stellantrieb (16), der die Länge des Radführungselementes (10) gezielt verändert, wobei in dem Stellglied eine Kompensationsfeder (36) vorgesehen ist, die den auf das Radführungselement (10) wirkenden Druckkräften (F) entgegenwirkt, wobei die Vorspannkraft der Kompensationsfeder (36) mittels eines zweiten Stellantriebes (48) veränderbar ist, der über einen zweiten Stelltrieb (42, 30) auf die Kompensationsfeder (36) wirkt, wobei der auf die Kompensationsfeder (36) wirkende, zweite Stelltrieb (42, 30) koaxial zu einer Stellstange (22) eines ersten Stellgetriebes (18) des ersten Stellantriebes (16) angeordnet ist, **dadurch gekennzeichnet, dass** die um die Stellstange (22) angeordnete, bevorzugt durch eine Schraubendruckfeder gebildete Kompensationsfeder (36) an einer Gewindemutter (34) abgestützt ist, die auf einer untersetzten Gewindehülse (28) geführt ist.

2. Stellglied nach Anspruch 1, **dadurch gekennzeichnet, dass** die Vorspannkraft der Kompensationsfeder (36) abhängig vom Beladungszustand und/oder von fahrspezifischen Parametern des Kraftfahrzeuges veränderbar ist.

3. Stellglied nach Anspruch 1 oder 2, **dadurch gekennzeichnet, dass** die Vorspannkraft der Kompensationsfeder (36) abhängig von der Leistungsaufnahme des ersten Stellmotors (16) veränderbar ist.

4. Stellglied nach Anspruch 1, 2 oder 3, **dadurch gekennzeichnet, dass** der zweite Stelltrieb (42, 30)über einen benachbart und achsparallel zum ersten Stellantrieb (16) mit Stellgetriebe (18) angeordneten Elektromotor (48) angetrieben ist.

5. Stellglied nach einem der Ansprüche 1 bis 4, **dadurch gekennzeichnet, dass** der zweite Stelltrieb (42, 30) einen Vorgelegetrieb (42) aufweist, über den die Gewindehülse (28) angetrieben ist.

6. Stellglied nach Anspruch 5, **dadurch gekennzeichnet, dass** der Vorgelegetrieb (42) in axialer Richtung gesehen zwischen dem ersten Stellgetriebe (18) und der Kompensationsfeder (36) positioniert ist.

7. Stellglied nach den Ansprüchen 5 oder 6, **dadurch gekennzeichnet, dass** ein Abtriebszahnrad (40) des Vorgelegetriebes (42) einstückig mit der Gewindehülse (28) des zweiten Stelltriebes (30) ausgeführt ist.

8. Stellglied nach einem der vorhergehenden Ansprüche , **dadurch gekennzeichnet, dass** die Gewindehülse (28) auf einer um die Stellstange (22) des ersten Stellgetriebes (18) angeordneten, gehäusefesten Führungshülse (26) drehbar gelagert ist.

9. Stellglied nach einem der vorhergehenden Ansprüche, **dadurch gekennzeichnet, dass** die Drehlagerung der Gewindehülse (28) und/oder des Abtriebszahnrades (40) des Vorgelegetriebes (42) durch Radialwälzlager (32) und ein zwischen dem Abtriebszahnrad (40) und einem Flanschabschnitt (24) der Führungshülse (26) angeordnetes Axialwälzlager (50) gebildet ist.

10. Stellglied nach einem der vorhergehenden Ansprüche, **dadurch gekennzeichnet, dass** der erste Stellantrieb (16) mit dem Stellgetriebe (18) und der zweite Stellantrieb (48) mit dem Stelltrieb (42, 30) in einem gemeinsamen Gehäuse (20) des Radführungselementes (10) integriert sind.

## Claims

1. Actuator for a wheel guide element (10) of motor vehicle wheel suspensions, comprising a first, preferably electrically driven actuating drive (16) which selectively changes the length of the wheel guide element (10), a compensation spring (36) being provided in the actuator to counteract the compressive forces (F) acting on the wheel guide element (10), the pretensioning force of the compensation spring (36) being able to be changed by means of a second actuating drive (48) which acts on the compensation spring (36) via a second actuating pinion (42, 30), the second actuating pinion (42, 30) which acts on the compensation spring (36) being arranged coaxially with an actuating rod (22) of a first actuating gear (18) of the first actuating drive (16), **characterised in that** the compensation spring (36), which is arranged around the actuating rod (22) and is preferably formed by a helical compression spring, is supported on a threaded nut (34) which is guided on a reduced threaded sleeve (28).

2. Actuator according to claim 1, **characterised in that** the pretensioning force of the compensation spring (36) can be changed as a function of the loading state and/or parameters of the motor vehicle which are specific to driving.

3. Actuator according to either claim 1 or claim 2, **characterised in that** the pretensioning force of the compensation spring (36) can be changed as a function of the power consumption of the first servomotor (16).

4. Actuator according to claim 1, claim 2, or claim 3, **characterised in that** the second actuating pinion (42, 30) is driven via an electric motor (48) which is arranged adjacent and axially parallel to the first actuating drive (16) having an actuating gear (18).

5. Actuator according to any of claims 1 to 4, **characterised in that** the second actuating pinion (42, 30) comprises an intermediate transmission (42), via which the threaded sleeve (28) is driven.

6. Actuator according to claim 5, **characterised in that** the intermediate transmission (42), viewed in the axial direction, is positioned between the first actuating gear (18) and the compensation spring (36).

7. Actuator according to either claim 5 or claim 6, **characterised in that** a driven gear (40) of the intermediate transmission (42) is formed in one piece with the threaded sleeve (28) of the second actuating pinion (30).

8. Actuator according to any of the preceding claims, **characterised in that** the threaded sleeve (28) is rotatably mounted on a guide sleeve (26) which is arranged around the actuating rod (22) of the first actuating gear (18) and fixed to the housing.

9. Actuator according to any of the preceding claims, **characterised in that** the rotary mounting of the threaded sleeve (28) and/or of the driven gear (40) of the intermediate transmission (42) is formed by radial anti-friction bearings (32) and an axial anti-friction bearing (50) which is arranged between the driven gear (40) and a flanged portion (24) of the guide sleeve (26).

10. Actuator according to any of the preceding claims, **characterised in that** the first actuating drive (16) having the actuating gear (18) and the second actuating drive (48) having the actuating pinion (42, 30) are integrated in a common housing (20) of the wheel guide element (10).

## Revendications

1. Actionneur pour un élément de guidage de roue (10) de suspensions de roues de véhicule automobile, comprenant un premier vérin (16) de préférence actionné électriquement, qui modifie de manière adéquate la longueur de l'élément de suspension de roue (10), dans lequel il est prévu dans l'actionneur un ressort de compensation (36) qui s'oppose aux forces de pression (F) agissant sur l'élément de guidage de roue (10), dans lequel la force de précontrainte du ressort de compensation (36) peut être modifiée au moyen d'un second vérin (48), qui agit via une seconde commande de réglage (42, 30) sur le ressort de compensation (36), dans lequel la seconde commande de réglage (42, 30) agissant sur le ressort de compensation (36) est aménagé coaxialement à une tringle de réglage (22) d'un premier mécanisme de réglage (18) du premier vérin (16), **caractérisé en ce que** le ressort de compensation (36) aménagé sur la tringle de réglage (22) et de préférence formé d'un ressort cylindrique de compression s'appuie sur un écrou taraudé (34) qui est guidé sur une douille filetée démultipliée (28).

2. Actionneur selon la revendication 1, **caractérisé en ce que** la force de précontrainte du ressort de compensation (36) peut être modifiée en fonction de l'état de charge et/ou de paramètres du véhicule automobile spécifiques à la conduite.

3. Actionneur selon la revendication 1 ou 2, **caractérisé en ce que** la force de précontrainte du ressort de compensation (36) peut être modifiée en fonction de l'absorption de puissance du premier moteur de commande (16).

4. Actionneur selon la revendication 1, 2 ou 3, **caractérisé en ce que** la seconde commande de réglage (42, 30) est entraînée via un moteur électrique (48) agencé au voisinage et en parallélisme axial avec le premier vérin (16) avec le mécanisme de réglage (18).

5. Actionneur selon l'une quelconque des revendications 1 à 4, **caractérisé en ce que** la seconde commande de réglage (42, 30) présente une commande de transmission (42) par laquelle la douille filetée (28) est entraînée.

6. Actionneur selon la revendication 5, **caractérisé en ce que** la commande de transmission (42) est positionnée, vue dans la direction axiale, entre le premier mécanisme de réglage (18) et le ressort de compensation (36).

7. Actionneur selon la revendication 5 ou 6, **caractérisé en ce que** la roue dentée de sortie (40) de la commande de transmission (42) est formée d'un seul tenant avec la douille filetée (28) de la seconde commande de réglage (30).

8. Actionneur selon l'une quelconque des revendications précédentes, **caractérisé en ce que** la douille filetée (28) est montée à rotation sur une douille de guidage (26) fixée à la caisse et agencée autour de la tringle de réglage (22) du premier mécanisme de réglage (18).

9. Actionneur selon l'une quelconque des revendications précédentes, **caractérisé en ce que** le montage à rotation de la douille filetée (28) et/ou de la roue dentée de sortie (40) de la commande de transmission (42) est formé par un palier à roulement radial (32) et un palier à roulement axial (50) agencés entre la roue dentée de sortie (40) et une section bridée (24) de la douille de guidage (26).

10. Actionneur selon l'une quelconque des revendications précédentes, **caractérisé en ce que** le premier vérin (16) est intégré, avec le mécanisme de réglage (18 et le second vérin (48) avec la commande de réglage (42, 30), dans une caisse commune (20) de l'élément de guidage de roue (10).
